# EUROPÄISCHE PATENTSCHRIFT

(11) **EP 2 796 653 B1**
(45) Veröffentlichungstag und Bekanntmachung des Hinweises auf die Patenterteilung: **04.12.2019**
(21) Anmeldenummer: 14002240.1
(22) Anmeldetag: 22.10.2012
(51) Int. Cl.: A47F 7/00, B25J 15/06, B65G 57/00, E06B 3/673, B65G 49/06

(54) **Verfahren und Vorrichtung zum Versiegeln von Isolierglas-Rohlingen**
Method and device for sealing insulating glass blanks
Procédé et dispositif de scellement d'ébauches en verre isolant

(30) Priorität: 20.10.2011 AT 15412011
(43) Veröffentlichungstag der Anmeldung: 29.10.2014
(62) Teilanmeldung aus: 12787627.4
(73) Patentinhaber: LISEC Austria GmbH, 3353 Seitenstetten (AT)
(72) Erfinder: Mader, Leopold, 3364 Neuhofen/Ybbs (AT)
(74) Vertreter: Beer & Partner Patentanwälte KG

(56) Entgegenhaltungen:
- EP-A1- 1 698 575
- EP-A1- 2 301 868
- EP-A2- 1 733 909
- WO-A1-2008/135032
- WO-A1-2011/015610
- DE-A1- 2 834 902
- DE-A1- 3 408 688
- FR-A1- 2 849 795

## Beschreibung

Die Erfindung betrifft ein Verfahren und eine Vorrichtung zum Versiegeln von Isolierglas-Rohlingen im Zuge des Herstellens von Isolierglas (DE 34 08 688 A).

Es ist bekannt und beim Herstellen von Isolierglas üblich, die zwischen den Glasscheiben außerhalb der Abstandhalter liegende, nach außen offene Randfuge von Isolierglas-Rohlingen, bestehend aus wenigstens zwei Glasscheiben mit dazwischen gefügtem Abstandhalter, der mit den Glasscheiben verbunden ist, mit Versiegelungsmasse zu füllen, um den endgültigen Verbund der Glasscheiben des Isolierglases zu erzielen. Für das Versiegeln von Isolierglas-Rohlingen sind verschiedentlich Vorschläge betreffend Verfahren und Vorrichtung gemacht worden. Insbesondere ist es problematisch, die Isolierglasscheiben während und nach dem Versiegeln zu transportieren, da Versiegelungsmasse, so lange sie nicht ausgehärtet ist, sehr klebrig ist und Transportmittel, die am (unteren) Rand der Isolierglasscheiben angreifen, verschmutzt. Um dieses Problem zu lösen, sind verschiedene Vorschläge für spezielle Ausbildungen von Fördermitteln gemacht worden (vgl. z.B. AT 384 596 B, EP 0 122 405 A, EP 0 857 848 A und DE 34 00 031 C).

Aus der DE 34 08 688 A sind ein gattungsgemäßes Verfahren und eine gattungsgemäße Vorrichtung bekannt. Bei der DE 34 08 688 A werden Isolierglas-Rohlinge lediglich im Bereich ihres unteren Randes abgestützt und im Bereich ihres oberen Randes gehalten.

Maßnahmen oder Einrichtungen, wie versiegelte Isolierglas-Rohlinge aus der Vorrichtung entfernt werden können, sind in der DE 34 08 688 A nicht geoffenbart.

Wenngleich sich die bekannten Verfahren und Vorrichtungen überwiegend bewährt haben, besteht Bedarf an einem verbesserten Verfahren zum Versiegeln und zum Abstapeln von frisch versiegelten Isolierglas-Rohlingen auf Lagerböcken, das bisher oft problematisch war, und an Vorrichtungen hiefür.

Der Erfindung liegt die Aufgabe zu Grunde, das Versiegeln zu verbessern, wobei dem Umstand, dass frische Versiegelungsmasse klebrig ist, Rechnung getragen werden soll.

Gelöst wird diese Aufgabe erfindungsgemäß mit einem Verfahren, das die Merkmale des unabhängigen Anspruches 1 aufweist.

Insoweit die erfindungsgemäße Vorrichtung betroffen ist, wird die genannte Aufgabe mit einer Vorrichtung gelöst, welche die Merkmale des auf die Vorrichtung gerichteten Anspruches 2 aufweist.

Bevorzugte und vorteilhafte Ausgestaltungen der Erfindung sowohl was das Verfahren als was auch die Vorrichtung anlangt, sind Gegenstand der Unteransprüche.

Bei der Erfindung ist vorgesehen, dass der in der Versieglungsstation versiegelte Isolierglas-Rohling von einem Entnahme-Roboter, der beispielsweise mit einem Saugerfeld bestückt ist, erfasst wird, dass Stütz- und Halteeinrichtungen, z.B. Rollbalken oder Greifer-Anordnung, vom unteren Rand des versiegelten Isolierglas-Rohlings gelöst und abgesenkt und vom oberen Rand des versiegelten Isolierglas-Rohlings angehoben werden, und dass der nur vom Entnahme-Roboter gehaltene, versiegelte Isolierglas-Rohling aus der Versiegelungsstation nach hinten, auf die der Versiegelungsstation gegenüberliegende Seite in Richtung von der Versiegelungsdüse weg entfernt, insbesondere zu dem Zwischenspeicher hin bewegt, wird.

Dabei kann der Entnahme-Roboter ein Saugerfeld aufweisen, das entweder parallel zur Förderrichtung von Isolierglas-Rohlingen in der Versiegelungsstation oder quer zu dieser Förderrichtung ausgerichtet an einem Balken beweglich ist.

Bei dem erfindungsgemäßen Verfahren wird der versiegelte Isolierglas-Rohling aus der Versiegelungsstation in Richtung von der Versiegelungsdüse weg entfernt.

Eine Vorrichtung zum Ausführen des erfindungsgemäßen Verfahrens zum Versiegeln zeichnet sich dadurch aus, dass die Stütz- und Halteeinrichtungen vom unteren Rand des versiegelten Isolierglas-Rohlings lösbar und absenkbar sind, dass die Stütz- und Halteeinrichtung vom oberen Rand des versiegelten Isolierglas-Rohlings anhebbar ist und dass der Versiegelungsstation ein Entnahme-Roboter zugeordnet ist, der auf der der Versiegelungsanordnung gegenüberliegenden Seite angeordnet ist, durch den der Isolierglas-Rohling aus der Versiegelungsstation nach hinten, auf die der Versiegelungsanordnung gegenüberliegende Seite in Richtung von der Versiegelungsdüse weg, entfernbar ist.

In einer Ausführungsform kann sich die Vorrichtung dadurch auszeichnen, dass der Entnahme-Roboter ein Feld von mit Unterdruck beaufschlagbaren Saugern aufweist.

In einer Ausführungsform kann sich die Vorrichtung dadurch auszeichnen, dass der Entnahme-Roboter zwischen einer der Versiegelungsstation zugeordneten Lage in eine einem Zwischenspeicher zugeordnete Lage verstellbar ist.

In einer Ausführungsform kann sich die Vorrichtung dadurch auszeichnen, dass der Entnahme-Roboter aus der der Versiegelungsstation zugeordneten Lage in die dem Zwischenspeicher zugeordnete Lage durch Verschieben entlang einer Führungsschiene verstellbar ist.

In einer Ausführungsform kann sich die Vorrichtung dadurch auszeichnen, dass der Entnahme-Roboter um eine im Wesentlichen lotrechte Achse aus der der Versiegelungsstation zugeordneten Stellung in die dem Zwischenspeicher zugeordnete Stellung schwenkbar ist.

In einer Ausführungsform kann sich die Vorrichtung dadurch auszeichnen, dass das mit Saugern bestückte Feld des Entnahme-Roboters über einen, um mehrere Achsen knickbaren Arm an einem Schlitten angeordnet ist, der an einer horizontalen Führungsschiene verschiebbar ist.

In einer Ausführungsform kann sich die Vorrichtung dadurch auszeichnen, dass der Entnahme-Roboter über einen, um mehrere Achsen knickbaren Arm an einem Turm um eine im Wesentlichen lotrechte Achse schwenkbar gelagert ist.

Weitere Einzelheiten und Merkmale der Erfindung ergeben sich aus der nachstehenden Beschreibung von Ausführungsbeispielen an Hand der angeschlossenen Zeichnungen. Es zeigt:
Fig. 1 schematisch in Ansicht eine erste Ausführungsform einer erfindungsgemäßen Vorrichtung,
Fig. 2 eine Einzelheit im Bereich des unteren Randes eines Isolierglas-Rohlings,
Fig. 3 schematisch und in Ansicht eine zweite Ausführungsform einer erfindungsgemäßen Vorrichtung,
Fig. 4 schematisch eine Ausführungsform einer Greifer-Anordnung,
Fig. 5 in Seitenansicht einen Greifer der Greifer-Anordnung von Fig. 4 und
Fig. 6 in Seitenansicht einen Greifer für ein Dreifach-StufenElement.

Eine Vorrichtung 1 besitzt in der Versiegelungsstation 2 am unteren Rand eine Reihe von Rollen oder Förderbändern 4, die als Zufuhrförderer 3 für Isolierglas-Rohlinge 5 dient. Isolierglas-Rohlinge 5 werden mit Hilfe einer der Versiegelungsstation 2 vorgeschalteten Fördereinrichtung 6, beispielsweise aus einer Station zum Zusammenstellen von Isolierglas-Rohlingen 5 kommend, in die Versiegelungsstation 2 transportiert. In der Versiegelungsstation 2 wird der obere Rand des Isolierglas-Rohlings 5 von einem Rollenbalken 7 abgestützt, der in der Vorrichtung an zwei im wesentlichen lotrechten Balken 36 auf und ab verschiebbar ist. Hierzu ist ein nicht näher gezeigter motorischer Antrieb vorgesehen. Der Rollenbalken 7 ist mit einer Reihe von, beispielsweise topfförmigen, Rollen 8 bestückt, über die der Rollenbalken 7 den Isolierglas-Rohling 5 durch Anliegen an die ihm zugekehrte Glasscheibe des Isolierglas-Rohlings 5 so abstützt, dass der obere Rand des Isolierglas-Rohlings 5 frei zugänglich ist.

Auf dem Zuführförderer 3 aufstehend werden Isolierglas-Rohlinge 5 in eine Stellung gebracht, in der sie in der Versiegelungsstation 1 der Versiegelungsanordnung 10 zugeordnet sind.

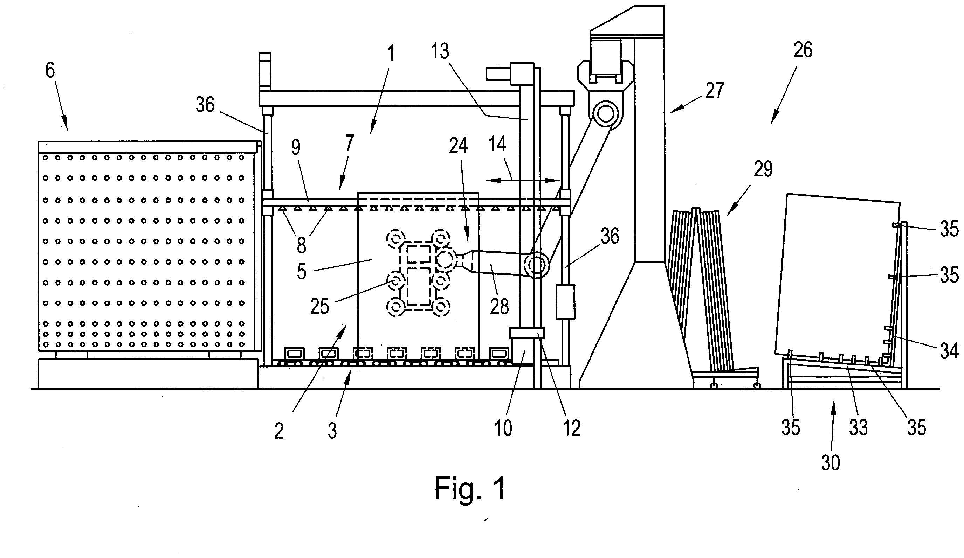

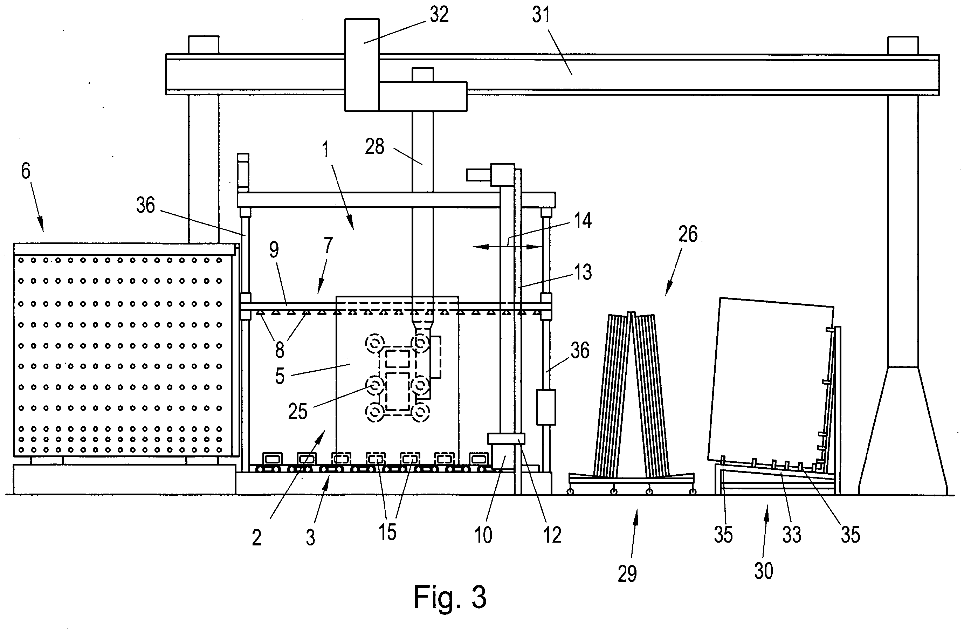

Die Versiegelungsanordnung 10 besteht im Beispiel aus einer Versiegelungsdüse 11, die über einen Schlitten 12 an einem Führungsbalken 13 auf und ab verschiebbar geführt und um eine zur Ebene des Isolierglas-Rohlings 5 normale Achse schwenkbar (drehbar) ist. Der Führungsbalken 13 selbst ist in einer zum Isolierglas-Rohling 5 parallelen Ebene horizontal verstellbar, wie dies durch Pfeile 14 in Fig. 1 und 3 angedeutet ist. So kann die Versiegelungsdüse 11 rings um den Rand eines (stillstehenden) Isolierglas-Rohlings 5 fahren, um alle (vier) Abschnitte der Randfuge mit Versiegelungsmasse zu füllen.

Es ist bevorzugt, dass nur die Versiegelungsanordnung 10 bewegt wird, wenn die Versiegelungsdüse 11 den gesamten Umfang eines Isolierglas-Rohlings 5 abfährt. In bestimmten Fällen, insbesondere bei Sonderformen, kann eine Bewegung der Versiegelungsanordnung 10 ("Versiegelungskopf") entlang des Führungsbalkens 13 mit einer Bewegung des Führungsbalkens 13 in horizontaler Richtung (Pfeil) kombiniert sein. So können Sonderformen von Isolierglas-Rohlingen 5 (schiefe und/oder gekrümmte Randabschnitte der Isolierglas-Rohlinge 5) versiegelt werden. Es ist aber auch in Betracht gezogen, an Stelle der Bewegungen der Versiegelungsdüse 11 allein (Bewegungen der Versiegelungsdüse 11 auf und ab für das Versiegeln der im Wesentlichen lotrechten Ränder des Isolierglas-Rohlings 5 und horizontale Bewegungen der Versiegelungsdüse 11 für das Versiegeln der im Wesentlichen horizontalen Ränder des Isolierglas-Rohlings 5) eine Kombination von Bewegungen der Versiegelungsdüse 5(im Wesentlichen lotrecht auf und ab für im Wesentlichen lotrechte Ränder des Isolierglas-Rohlings 5) mit horizontalen Bewegungen des Isolierglas-Rohlings 5 bei stillstehender Versiegelungsdüse 11 (für die horizontalen Ränder des Isolierglas-Rohlings 5) auszuführen.

Wenn Sonderformen (von der rechteckigen/quadratischen Umrissform abweichende Umrissformen von Isolierglas-Rohlingen 5) zu versiegeln sind, können auch gleichzeitig Bewegungen der Versiegelungsdüse 11 und des Isolierglas-Rohlings 5 ausgeführt werden.

Die Erfindung ist nicht auf "Ein-Düsen"-Vorrichtungen beschränkt. Vielmehr können auch Versiegelungsanordnungen 10 mit zwei Versiegelungsdüsen 11 verwendet werden. Trotzdem sind "EinDüsen"-Versiegelungsanordnungen 10 bevorzugt.

Um das Versiegeln ausführen zu können, wird in einer Ausführungsform der in die Versiegelungsstation 2 transportierte Isolierglas-Rohling 5 in der Versieglungsstation 2 an seiner der Versiegelungsdüse 11 gegenüberliegenden Seite von Saugern 15 erfasst, und die Fördermittel des Zuführförderers 3 vom Isolierglas-Rohling 5 entfernt, insbesondere die Förderbänder 4, am unteren Rand des Isolierglas-Rohlings 5, insbesondere nach hinten, zurückgezogen, und gegebenenfalls der Rollenbalken 7 nach oben aus dem Bereich des Isolierglas-Rohlings 5 wegbewegt.

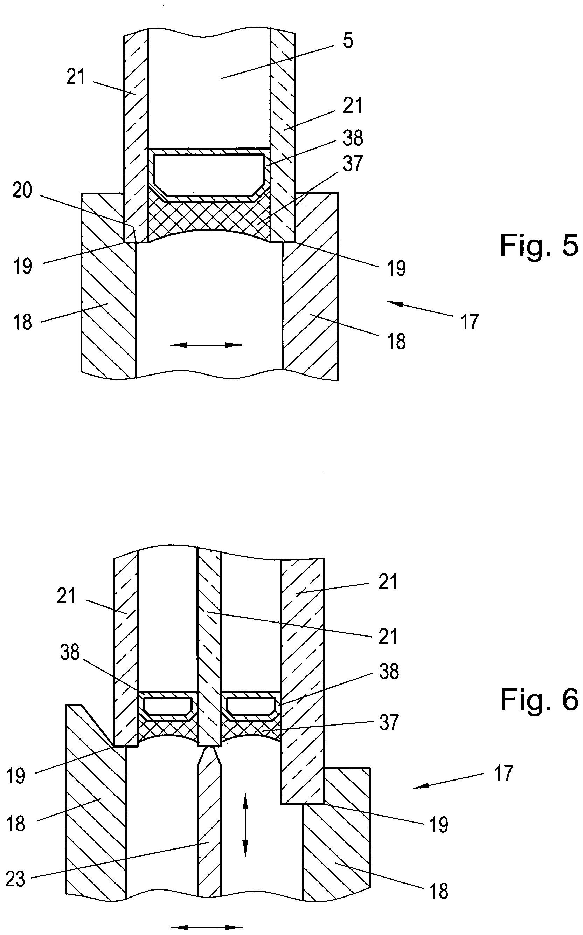

In einer alternativen, gegebenenfalls aber zusammen mit den zuvor erwähnten Saugern 15 verwirklichten Ausführungsform werden, um den Isolierglas-Rohling 5 sicher zu halten, dessen unterem Rand, diesen abstützende Greifer-Anordnungen 16 zugeordnet. Die Greifer 17 der Greifer-Anordnungen 16 sind dem unteren Rand des Isolierglas-Rohlings 5 zugeordnet und erfassen dessen unteren Rand durch Klemmen mit Hilfe von Backen 18. Dabei kann vorgesehen sein, dass die Greifer 17 und deren Backen 18 bzw. Abstützglieder Spitzen oder Kanten aufweisen, so dass eine im Wesentlichen nur punkt- bzw. linienförmige Berührung des Außenrandes der Glasscheiben des Isolierglas-Rohlings 5 gegeben ist. Insbesondere sind die Backen 18 der Greifer 17, die geöffnet und geschlossen, d.h. an einen Isolierglas-Rohling 5 angelegt werden können, so ausgebildet, dass sie nur im Bereich der äußeren Kante 19 des Randes 20 der Glasscheiben 21 eines Isolierglas-Rohlings 5 angreifen (Fig. 5 und 6).

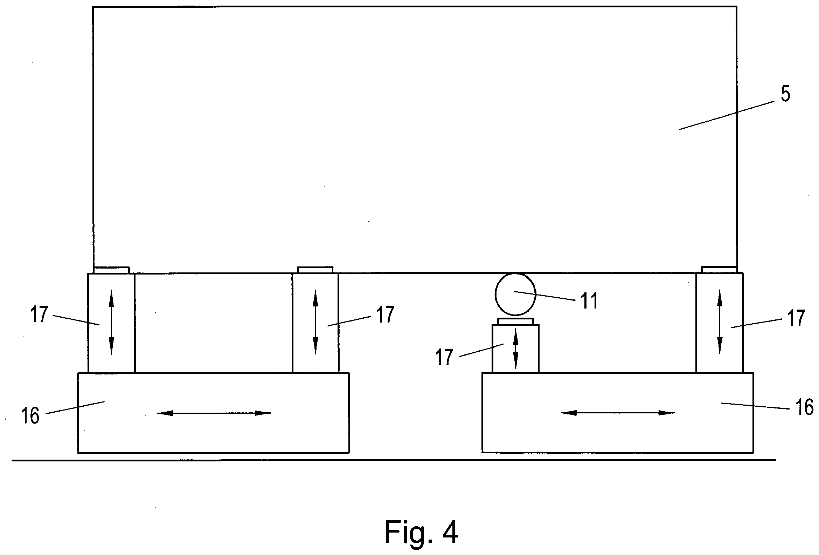

Bei dem in Fig. 4, 5 und 6 gezeigten Beispiel für eine Greifer-Anordnung 16 sind je zwei oder mehr als zwei Greifer 17 an einem gemeinsamen Träger 22 angeordnet. Jeder Greifer 17 trägt an seinem oberen Ende eine Klemme mit zwei Backen 18, mit welcher der Greifer 17 einen Isolierglas-Rohling 5 an seinem unteren Rand erfasst und klemmend festhält. So wird ein in die Versiegelungsstation 2 transportierter Isolierglas-Rohling 5 nach dem Entfernen des unteren Zuführförderers 3, umfassend Förderbänder 4, in der Versieglungsstation 2 während des Versiegelns von der wenigstens einen Greifer-Anordnung 16, gegebenenfalls gemeinsam mit den Saugköpfen 15 gehalten.

Jeder der Greifer 17 ist aus seiner Wirkstellung absenkbar, so dass, wie in Fig. 4 gezeigt, die Greifer 17 die Bewegung der Versieglungsdüse 11 während des Versiegelns des unteren (horizontalen) Randabschnittes der Randfuge des Isolierglas-Rohlings 5 nicht behindern. Wie erwähnt, wird die Bewegung der Düse 11 entlang des unteren horizontalen Abschnittes der Randfuge eines Isolierglas-Rohlings 5 insbesondere durch alleiniges Bewegen der Versiegelungsanordnung 10 (Bewegen des Führungsbalkens 13 in Richtung des Pfeiles 14) erreicht.

Wenn ein von der Greifer-Anordnung 16 erfasster und von Greifern 17 klemmend festgehaltener Isolierglas-Rohling 5 horizontal zu bewegen ist, kann dies durch Bewegen der Greifer-Anordnung 16 oder der Greifer-Anordnungen 16, wenn zwei oder mehr als zwei Greifer-Anordnungen 16 vorgesehen sind, bewirkt werden.

Die dem unteren Rand des Isolierglas-Rohlings 5 zugeordneten Teile (Backen 18) der Greifer 17 sind beispielsweise durch Spitzen oder Schneiden so ausgebildet, dass sie an den Glasscheiben 21 des Isolierglas-Rohlings 5 nur punkt- oder linienförmig angreifen. Dabei ist auch in Betracht gezogen, dass die Greifer 17 nur an einer der zwei oder drei Glasscheiben 21 des Isolierglas-Rohlings 5 von unten her, den Isolierglas-Rohling 5 abstützend anliegen. Dies ist vor allem bei Isolierglas-Rohlingen 5 für Stufen-Isolierglas von Vorteil und gilt insbesondere für den mittleren Stützfinger 23 der Ausführungsform eines Greifers 17 von Fig. 6.

Die Möglichkeit, die wenigstens eine Greifer-Anordnung 16 horizontal zu verstellen, erlaubt es auch, die wenigstens eine Greifer-Anordnung 16 gegenüber dem Isolierglas-Rohling 5, beispielsweise im Bereich von wenigstens einer seiner unteren Ecken, auszurichten.

Wenn die Versiegelungsdüse 11 die Randfuge im Bereich des unteren, horizontalen Randes des Isolierglas-Rohlings 5 mit Versiegelungsmasse füllt (versiegelt), werden die Greifer 17 einer nach dem anderen wegbewegt, z.B. nach unten abgesenkt, so dass die Versiegelungsdüse 11 am unteren Rand des Isolierglas-Rohlings 5 entlang fahren kann. Dies ist für eine Versiegelungsdüse 11 (schematisch dargestellt) in Fig. 4 gezeigt.

Sobald alle Randfugenabschnitte des Isolierglas-Rohlings 5 mit Versiegelungsmasse gefüllt (versiegelt) worden sind, wird der Isolierglas-Rohling 5 von dem Entnahme-Roboter 24, der mit Saugern 25 bestückt ist, zu einem Zwischenspeicher 26 bewegt. In diesem Zwischenspeicher 26 werden Isolierglas-Rohlinge 5 beispielsweise nach Fertigungslosen sortiert abgestellt und Isolierglas kann aus dem Zwischenspeicher 26 nach Auftragslosen sortiert entnommen werden.

Die einen Isolierglas-Rohling 5 während des Versiegelns in der Versiegelungsstation 2 haltenden Sauger 15 sind unter die Förderebene des Zuführförderers 3 absenkbar, damit ein versiegelter Isolierglas-Rohling 5 vom Entnahme-Roboter 24 einfach nach hinten entnommen werden kann.

Ebenso sind die Fördermittel des Zuführförderers 3, z.B. die Rollen oder Förderbänder 4, auf welchen aufstehend ein Isolierglas-Rohling 5 in die Versiegelungsstation 2 gefördert wird, absenkbar, um einerseits das Versiegeln und andererseits das Entnehmen von versiegelten Isolierglas-Rohlingen 5 aus der Versiegelungsstation 2 mit Hilfe des Entnahme-Roboters 24 nicht zu behindern.

Wenn ein Isolierglas-Rohling 5 fertig versiegelt ist, wird zunächst das Feld mit Saugern 25 des Entnahme-Roboters 24 in Stellung gebracht und an den Isolierglas-Rohling 5 angelegt. Dann werden die Sauger 15 und/oder die Greiferanordnung 16 vom unteren Rand des Isolierglas-Rohlings 5 gelöst und abgesenkt, der Rollenbalken 7 angehoben, so dass der versiegelte Isolierglas-Rohling nun ausschließlich vom Feld mit Saugern 25 des Entnahme-Roboters 24 gehalten wird. Der Entnahme-Roboter 24 entnimmt versiegelte Isolierglas-Rohlinge 5 nach hinten, d.h. auf die der Versiegelungsanordnung 10 gegenüberliegende Seite, und bewegt die Isolierglas-Rohlinge 5 zu dem Zwischenspeicher 26, wo es abgestellt (abgestapelt) wird.

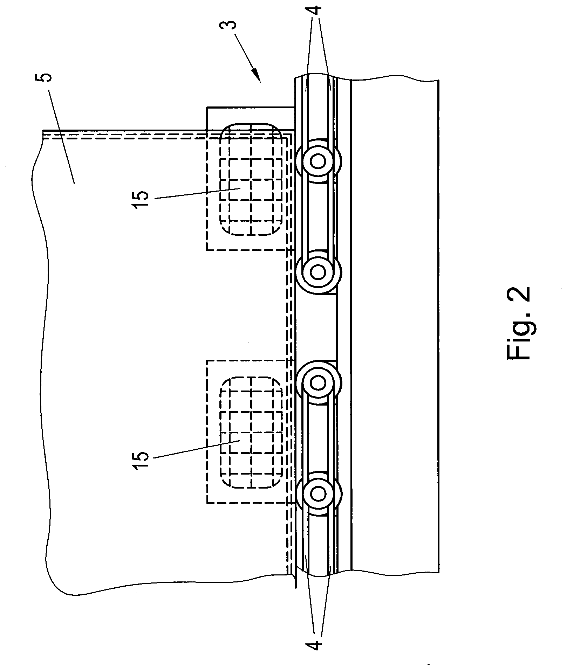

Der Entnahme-Roboter 24 der in Fig. 1 gezeigten Ausführungsform besitzt ein Feld mit Saugern 25, das an einem Turm 27 um eine lotrechte Achse aus einer der Versiegelungsstation 2 zugeordneten Stellung in eine dem Zwischenspeicher 26 zugeordnete Stellung schwenkbar angeordnet ist. Dabei ist das Feld mit Saugern 25 über einen, mehrere miteinander gelenkig verbundene Abschnitte aufweisenden Arm 28 am Turm 27 gelagert. Fig. 2 zeigt auch, dass der Arm 28 des Entnahme-Roboters 24, an dem das Feld mit den Saugern 25 montiert ist, um mehrere Achsen beweglich ist, um die Bewegungen beim Entnehmen von Isolierglas-Rohlingen 5 aus der Versiegelungsstation 2 und beim Abstapeln in den Zwischenspeicher 26 mit dem wenigstens einen A-lagerbock 29 und dem wenigstens einen Fächerwagen 30 ausführen zu können.

Bei der in Fig. 3 gezeigten Ausführungsform, die in ihrem grundsätzlichen Aufbau der Ausführungsform von Fig. 1 und 2 entspricht, ist ein Balken 31 vorgesehen, an dem der Entnahme-Roboter 24 zum Entnehmen von versiegelten Isolierglas-Rohlingen 5 und zum Bewegen desselben zum Zwischenspeicher 26 verschiebbar geführt ist. Der Balken 31 ist parallel zur Förderebene (parallel zur Bildebene der Fig. 2) ausgerichtet. Bei der Ausführungsform von Fig. 3 ist das Feld mit den Saugern 25 des Entnahme-Roboters 24 über einen Arm 28 an einem Schlitten 32 befestigt, der entlang des horizontalen Balkens 31 aus einer der Versiegelungsstation 2 zugeordneten Stellung (Fig. 3) in eine dem Zwischenspeicher 26 zugeordnete Stellung verfahrbar ist. So können in der Versiegelungsstation 2 versiegelte Isolierglas-Rohlinge 5 mit Hilfe des Entnahme-Roboters 24 aus der Versiegelungsstation 2 entnommen werden und im Zwischenspeicher 26 abgestellt ("abgestapelt") werden.

Der Zwischenspeicher 26 besitzt im gezeigten Ausführungsbeispiel je wenigstens einen "A-Lagerbock" 29 und einen "Fächerwagen" 30, wobei vorgesehen ist, dass Isolierglas-Rohlinge 5 mit Abstandhaltern mit üblicher bzw. häufig vorkommender Breite auf dem wenigstens einen A-Lagerbock 29 abgestellt werden. Isolierglas-Rohlinge 5 mit seltener vorkommenden Breiten von Abstandhaltern werden in dem wenigstens einen Fächerwagen 30 abgestellt. In dem Fächerwagen 30 sind an zueinander im Winkel ausgerichteten Armen 33, 34 Stützelemente 35 vorgesehen, die V-förmig ausgeschnittene, dem Rand von Isolierglas-Rohlingen zugekehrte Enden aufweisen, so dass Isolierglas-Rohlinge 5 im Fächerwagen 30 ausschließlich durch Angriff an den äußeren Kanten 19 der Ränder 20 der Glasscheiben 21 von Isolierglas abgestützt wird und die außerhalb der Abstandhalter 38 eingebrachte Versiegelungsmasse 37 nicht berührt wird. So besteht die Möglichkeit, im Zwischenspeicher 26 Isolierglas-Rohlinge 5 nach Fertigungslosen sortiert abzustellen und dann Isolierglas aus dem Zwischenspeicher 26 nach Auftragslosen zusammengestellt zu entnehmen.

Zusammenfassend kann ein Ausführungsbeispiel der Erfindung wie folgt beschrieben werden:
Beim Versiegeln werden Isolierglas-Rohlinge 5 in einer Versiegelungsstation 2 unten klemmend durch Greifer 17 einer Greifer-Anordnung 16 und/oder durch Saugköpfe 15 gehalten und liegen oben an einem mit Rollen 8 bestückten Rollenbalken 7 an. Beim Versiegeln von Isolierglas-Rohlingen 5 bewegt sich nur die Düse 11 einer Versiegelungsanordnung 10 entlang des Außenrandes des Isolierglas-Rohlings 5, der während des Versiegelns stillsteht. Wenn der untere Rand eines Isolierglas-Rohlings 5 versiegelt wird, werden am unteren Rand angreifende Greifer 17 gelöst und nach unten wegbewegt. Versiegelte Isolierglas-Rohlinge 5 werden von einem Entnahme-Roboter 24 aus der Versiegelungsstation 2 auf die der Versiegelungsanordnung 10 gegenüberliegenden Seite hin entnommen, zu einem Zwischenspeicher 26 bewegt und in diesem auf A-Lagerböcken 29 und Fächergestellen 30 nach Fertigungslosen sortiert abgestellt.

## Patentansprüche

1. Verfahren zum Versiegeln von Isolierglas-Rohlingen (5) mit Hilfe einer Versiegelungsanordnung (10) mit wenigstens einer Versiegelungsdüse (11), die entlang des Randes des Isolierglas-Rohlings (5) bewegt wird, wobei aus der Versiegelungsdüse (11) Versiegelungsmasse in eine nach außen offene Randfuge des Isolierglas-Rohlings (5) eingebracht wird, wobei der Isolierglas-Rohling (5) während des Versiegelns ausschließlich im Bereich seines oberen Randes und seines unteren Randes gehalten wird, **dadurch gekennzeichnet, dass** der versiegelte Isolierglas-Rohling von einem Entnahme-Roboter (24) erfasst wird, dass Stütz- und Halteeinrichtungen (7, 15, 16) vom unteren Rand des versiegelten Isolierglas-Rohlings (5) gelöst und abgesenkt und vom oberen Rand des versiegelten Isolierglas-Rohlings (5) angehoben werden, und dass der nur vom Entnahme-Roboter (24) gehaltene, versiegelte Isolierglas-Rohling (5) aus der Versiegelungsstation (2) nach hinten, auf die der Versiegelungsanordnung (10) gegenüberliegende Seite in Richtung von der Versiegelungsdüse (11) weg entfernt wird.

2. Vorrichtung zum Ausführen des Verfahrens nach Anspruch 1, wobei in der Versiegelungsstation (2) eine an einem Führungsbalken (13) im Wesentlichen lotrecht auf- und abbewegbare Versiegelungsanordnung (10) mit wenigstens einer Versiegelungsdüse(11) vorgesehen ist, wobei der Führungsbalken (13) horizontal verschiebbar ist und wobei zum Halten eines Isolierglas-Rohlings (5) in der Versiegelungsstation (2) ausschließlich im Bereich des unteren Randes und im Bereich des oberen Randes des Isolierglas-Rohlings (5) angreifende Stütz- bzw. Halteeinrichtungen (7, 15, 16) vorgesehen sind, **dadurch gekennzeichnet, dass** die Stütz- und Halteeinrichtungen (15, 16) vom unteren Rand des versiegelten Isolierglas-Rohlings (5) lösbar und absenkbar sind, dass die Stütz- und Halteeinrichtung (7) vom oberen Rand des versiegelten Isolierglas-Rohlings (5) anhebbar ist und dass der Versiegelungsstation (2) ein Entnahme-Roboter (24) zugeordnet ist, der auf der der Versiegelungsanordnung (10) gegenüberliegenden Seite angeordnet ist, durch den der Isolierglas-Rohling (5) aus der Versiegelungsstation (2) nach hinten, auf die der Versiegelungsanordnung (10) gegenüberliegende Seite in Richtung von der Versiegelungsdüse (11) weg, entfernbar ist.

3. Vorrichtung nach Anspruch 2, **dadurch gekennzeichnet, dass** der Entnahme-Roboter (24) ein Feld von mit Unterdruck beaufschlagbaren Saugern (25) aufweist.

4. Vorrichtung Anspruch 2 oder 3, **dadurch gekennzeichnet, dass** der Entnahme-Roboter (24) zwischen einer der Versiegelungsstation (2) zugeordneten Lage und einer einem Zwischenspeicher (26) zugeordneten Lage verstellbar ist.

5. Vorrichtung nach Anspruch 4, **dadurch gekennzeichnet, dass** der Entnahme-Roboter (24) aus der der Versiegelungsstation (2) zugeordneten Lage in die dem Zwischenspeicher (26) zugeordnete Lage durch Verschieben entlang einer Führungsschiene (31) verstellbar ist.

6. Vorrichtung nach Anspruch 5, **dadurch gekennzeichnet, dass** das mit Saugern (25) bestückte Feld des Entnahme-Roboters (24) über einen Arm (28) an einem Schlitten (32) angeordnet ist, der an der horizontalen Führungsschiene (31) verschiebbar ist.

7. Vorrichtung nach Anspruch 4, **dadurch gekennzeichnet, dass** der Entnahme-Roboter (24) um eine im wesentlichen lotrechte Achse aus der der Versiegelungsstation (2) zugeordneten Lage in die dem Zwischenspeicher (26) zugeordnete Lage schwenkbar ist.

8. Vorrichtung nach Anspruch 7, **dadurch gekennzeichnet, dass** der Entnahme-Roboter (24) über einen, um mehrere Achsen knickbaren Arm (28) an einem Turm (27) um eine im wesentlichen lotrechte Achse schwenkbar gelagert ist.

## Claims

1. Method for sealing insulating glass blanks (5) using a sealing assembly (10) having at least one sealing nozzle (11), which is moved along the edge of the insulating glass blank (5), wherein sealing compound is introduced from the sealing nozzle (11) into an outwardly open edge seam of the insulating glass blank (5), wherein the insulating glass blank (5) is held exclusively in the region of its upper edge and its lower edge during the sealing, **characterized in that** the sealed insulating glass blank is gripped by a removal robot (24), **in that** supporting and holding devices (7, 15, 16) are released and lowered from the lower edge of the sealed insulating glass blank (5) and raised from the upper edge of the sealed insulating glass blank (5), and **in that** the sealed insulating glass blank (5), which is held only by the removal robot (24), is removed from the sealing station (2) to the rear, towards the side opposite the sealing assembly (10) in the direction away from the sealing nozzle (11).

2. Device for carrying out the method according to claim 1, wherein in the sealing station (2) a sealing assembly (10) with at least one sealing nozzle (11) is provided which can be moved up and down substantially vertically on a guide beam (13), wherein the guide beam (13) is horizontally displaceable and wherein, for holding an insulating glass blank (5) in the sealing station (2), supporting or holding devices (7, 15, 16) engaging exclusively in the region of the lower edge and in the region of the upper edge of the insulating glass blank (5) are provided, **characterized in that** the supporting and holding devices (15, 16) can be released and lowered from the lower edge of the sealed insulating glass blank (5), **in that** the supporting and holding device (7) can be raised from the upper edge of the sealed insulating glass blank (5), and **in that** a removal robot (24) is assigned to the sealing station (2), which is disposed on the side opposite the sealing assembly (10), by means of which the insulating glass blank (5) can be removed rearwardly from the sealing station (2) to the side opposite the sealing assembly (10) in the direction away from the sealing nozzle (11).

3. Device according to claim 2, **characterized in that** the removal robot (24) has a panel of suction cups (25) which can be supplied with negative pressure.

4. Device according to claim 2 or 3, **characterized in that** the removal robot (24) is adjustable between a position assigned to the sealing station (2) and a position assigned to an intermediate storage unit (26).

5. Device according to claim 4, **characterized in that** the removal robot (24) can be adjusted from the position assigned to the sealing station (2) into the position assigned to the intermediate storage unit (26) by displacement along a guide rail (31).

6. Device according to claim 5, **characterized in that** the panel of the removal robot (24) equipped with suction cups (25) is arranged via an arm (28) on a carriage (32) which can be displaced on the horizontal guide rail (31) .

7. Device according to claim 4, **characterized in that** the removal robot (24) can be pivoted about a substantially vertical axis from the position assigned to the sealing station (2) into the position assigned to the intermediate storage unit (26).

8. Device according to claim 7, **characterized in that** the removal robot (24) is mounted via an arm (28) which can be bent about a plurality of axes on a tower (27) so as to be pivotable about an essentially vertical axis.

## Revendications

1. Procédé de scellement d'ébauches de vitrage isolant (5) à l'aide d'un agencement de scellement (10) comportant au moins une buse de scellement (11) qui est déplacée le long du bord de l'ébauche de vitrage isolant (5), une matière de scellement étant introduite par la buse de scellement (11) dans un joint périphérique ouvert vers l'extérieur de l'ébauche de vitrage isolant (5), l'ébauche de vitrage isolant (5) étant maintenue exclusivement au niveau de son bord supérieur et de son bord inférieur pendant le scellement, **caractérisé en ce que** l'ébauche de vitrage isolant scellée est saisie par un robot de prélèvement (24), que des moyens de support et de maintien (7, 15, 16) sont libérés et abaissés du bord inférieur de l'ébauche de vitrage isolant scellée (5) et relevés du bord supérieur de l'ébauche de vitrage isolant scellée (5), et que l'ébauche de vitrage isolant scellée (5), maintenue seulement par le robot de prélèvement (24), est retirée de la station de scellement (2) vers l'arrière, du côté opposé à l'agencement de scellement (10) dans une direction qui l'éloigne de la buse de scellement (11).

2. Dispositif pour mettre en œuvre le procédé selon la revendication 1, dans lequel il est prévu dans la station de scellement (2) un agencement de scellement (10) qui peut être déplacé sensiblement verticalement vers le haut et vers le bas sur une poutre de guidage (13) et présente au moins une buse de scellement (11), dans lequel la poutre de guidage (13) peut être déplacée horizontalement et dans lequel des moyens de support et de maintien (7, 15, 16) agissant exclusivement au niveau du bord inférieur et du bord supérieur de l'ébauche de vitrage isolant (5) sont prévus pour maintenir l'ébauche de vitrage isolant (5) dans la station de scellement (2), **caractérisé en ce que** les moyens de support et de maintien (15, 16) peuvent être libérés et abaissés du bord inférieur de l'ébauche de vitrage isolant scellée (5), que le moyen de support et de maintien (7) peut être relevé du bord supérieur de l'ébauche de vitrage isolant scellée (5), et qu'un robot de prélèvement (24) est associé à la station de scellement (2), lequel est disposé du côté opposé à l'agencement de scellement (10) et au moyen duquel l'ébauche de vitrage isolant (5) peut être retirée de la station de scellement (2) vers l'arrière, du côté opposé à l'agencement de scellement (10) dans une direction qui l'éloigne de la buse de scellement (11).

3. Dispositif selon la revendication 2, **caractérisé en ce que** le robot de prélèvement (24) présente un champ de ventouses (25) pouvant être soumises à une dépression.

4. Dispositif selon la revendication 2 ou 3, **caractérisé en ce que** le robot de prélèvement (24) peut être déplacé entre une position associée à la station de scellement (2) et une position associée à un stockage intermédiaire (26).

5. Dispositif selon la revendication 4, **caractérisé en ce que** le robot de prélèvement (24) peut être déplacé de la position associée à la station de scellement (2) dans la position associée au stockage intermédiaire (26) par coulissement le long d'un rail de guidage (31).

6. Dispositif selon la revendication 5, **caractérisé en ce que** le champ du robot de prélèvement (24) équipé de ventouses (25) est disposé par l'intermédiaire d'un bras (28) sur un chariot (32) qui peut coulisser sur le rail de guidage horizontal (31).

7. Dispositif selon la revendication 4, **caractérisé en ce que** le robot de prélèvement (24) peut pivoter autour d'un axe sensiblement vertical de la position associée à la station de scellement (2) dans la position associée au stockage intermédiaire (26).

8. Dispositif selon la revendication 7, **caractérisé en ce que** le robot de prélèvement (24) est monté pivotant autour d'un axe sensiblement vertical sur une tour (27) par l'intermédiaire d'un bras (28) pouvant être plié autour de plusieurs axes.
